# EUROPEAN PATENT APPLICATION

(11) **EP 1 241 825 A2**
(43) Date of publication of application: **18.09.2002**
(21) Application number: 02251675.1
(22) Date of filing: 08.03.2002
(51) Int. Cl.: H04L 7/04, H04B 7/26

(54) **Synchronization of digital data decoders**

(30) Priority: 16.03.2001 GB 0106492
(71) Applicant: Matsushita Communication Industrial UK Ltd., Thatcham, Berks RG19 4ZD (GB)
(72) Inventor: Harrison, Kenneth John, Swindon, Wiltshire SN3 1NE (GB); Townsend, David Mark, c/o Matsushita Communication, Thatcham, Berkshire RG19 4ZD (GB); Sherratt, Robert S., c/o Matsushita Communication, Thatcham, Berkshire RG19 4ZD (GB)
(74) Representative: Dawson, Elizabeth Ann

(57) **Abstract**

Burst timing synchronisation is maintained in a digital data decoder during multiple burst reception in a TDMA system. The data within a multiple burst are streamed into memory storage and data corresponding to a first burst in the series of bursts are selected on the basis of a current timing estimate derived from a synchronisation burst. Selections of data corresponding to other bursts in the series of bursts are modified in accordance with updated timing estimates derived from previously processed bursts.

## Description

This invention relates to digital data transmission systems and in particular it relates to digital data decoders

The following description relates to the GSM system (Global System for Mobile communications) and the invention is particularly suitable for use in the General Packet Radio System (GPRS). The method and apparatus have applications more generally, however, to other systems utilising Time Division Multiple Access (TDMA).

A mobile terminal is set up to communicate with a base station by means of a synchronisation process. The first stage of synchronisation is scanning of the wanted channel by the mobile terminal to acquire a Frequency Correction Burst (FCB) which is equivalent to an unmodulated carrier with a specific frequency offset. When a FCB has been received it is used to provide coarse time and frequency synchronisation by means of a narrow band filter, for example. The coarse time and frequency synchronisation is used for the next step in the synchronisation process.

The next step in the synchronisation process is to derive improved time and frequency synchronisation using a Synchronisation Burst (SB).

The traffic and control data to be received and processed by a particular mobile terminal are contained within a series of burst transmissions from the base station referred to as the Normal Bursts.

In this description, references to a burst relate to the transmission occurring during a single timeslot. A transmission occupying a number of consecutive timeslots is described as a series of bursts. We are concerned here with reception and subsequent decoding of a series of burst transmissions.

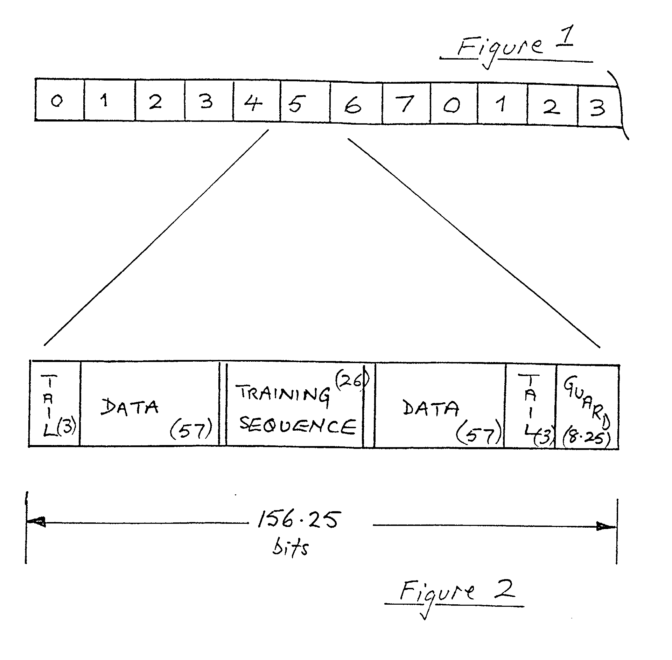

In GSM each mobile receiver receives a burst transmission from the base station in a single allocated timeslot within a sequence of timeslots. The sequence of timeslots, eight in number, is called a frame and is illustrated in figure 1. The allocated timeslot within the frame shown in figure 1 is marked as 5. Background information on the GSM system may be found in "GSM System Engineering" by Asha Mehrota published by Artech House Inc. 1997 ISBN 0-89006-860-7.

The initial synchronisation of the receiver should assure that the normal bursts are received within the expected timeslots. Movements of the receiver towards and away from the base station, however, can cause the position in time of the received burst within the expected timeslot to vary.

Part of the data included within a normal burst comprises a training sequence whereby a standard sequence of symbols is received whose position within the transmitted burst is known. Burst timing is obtained from the received normal burst by correlating the received burst with the expected training sequence.

With the advent of the GPRS system, the use of a number of consecutive timeslots, a so-called multiple burst, provides for an increase in the rate of transmission of data. It is anticipated that normally a mobile terminal using GPRS will receive more data than it transmits. This is likely to be the case for instance when a mobile terminal is used to access the internet with requests for data on the uplink (mobile to base) and receipt of data on the downlink (base to mobile).

The structure of a single burst for the GPRS arrangement is the same as that for the GSM burst and is as shown in figure 2. Therefore each of the bursts in a series of bursts in GPRS will be a normal burst as shown in figure 2 and the need to reconcile the timing error associated with each burst remains.

Conventionally each burst in the series of bursts received will be processed individually. In the multi-slot reception configuration, however, there is no opportunity to determine the time tracking error in the way that it would be done for reception of a single slot in each frame.

Consequently only the original estimate derived from the synchronisation burst could be used for positioning of the four bursts. As any error in time synchronisation is likely to increase for successive bursts the error in time tracking for successive bursts in the series of bursts is likely to be increase and therefore diverge through the multiple burst. A small error in time tracking can cause loss of data.

European patent applications 996237 and 996238 provide background information for the present invention and offer alternative solutions to the burst time tracking problem. Implementation of the techniques provided by EP 996237 and EP 996238, however, will cause difficulties for designers seeking to reduce complexity and processing requirements.

It is an object of this invention to provide a simple method and apparatus for burst time tracking within a sequence of bursts received in successive timeslots.

According to the invention there is provided a method of decoding digital data contained in a series of bursts comprising receiving and storing all of the data within a complete series of bursts, processing the stored data corresponding to a first burst in said series in accordance with current timing synchronisation to produce updated timing synchronisation and successively modifying the selection of the stored data corresponding to the other bursts in the series of bursts in accordance with updated timing synchronisation derived from a previously processed burst.

Accordingly the method may be carried into effect by means of apparatus comprising a receiver for decoding digital data contained in a series of bursts, the receiver having, memory storage into which all of the data within a complete series of bursts is streamed, means for processing the stored data corresponding to a first burst in said series in accordance with current timing synchronisation to produce updated timing synchronisation, and means for successively modifying the selection of the stored data corresponding to other bursts in the series of bursts in accordance with updated timing synchronisation derived from a previously processed burst.

Conveniently all of the data within the series of bursts remain in memory storage contemporaneously but this is not necessary. When the data corresponding to one burst has been operated upon the memory storage for that data may be overwritten.

An example of the method according to the invention and a description of the apparatus to implement the invention will now be described with reference to the accompanying figures in which;
figure 1 illustrates the slot timing sequence for GSM,
figure 2 illustrates the structure of a normal burst,
figure 3 is a block diagram of part of a digital radio receiver,
figure 4 shows a memory storage for a multi-slot series of bursts and the sequence of operations and
figure 5 is a block diagram of a modified digital radio receiver.

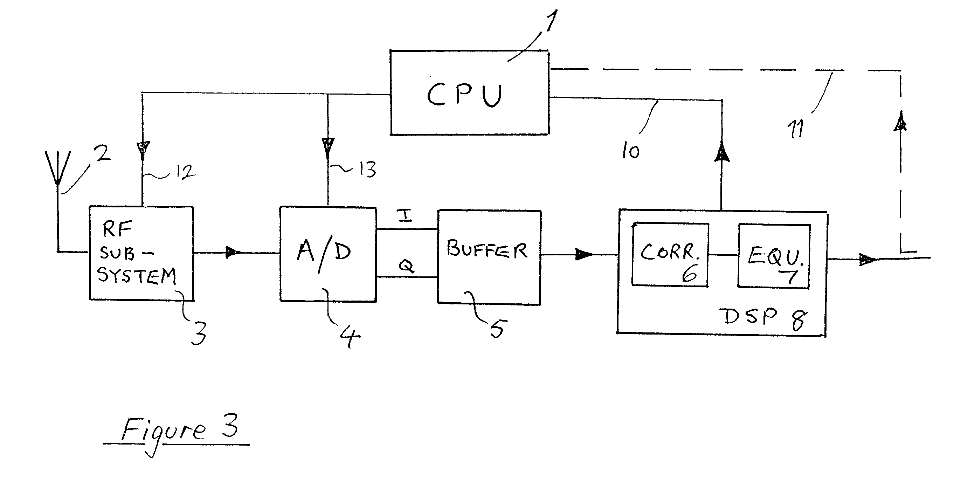

Within the figures the same numerals are used for identical elements. With reference to figure 3 part of a radio receiver for a mobile phone in accordance with the prior art is shown as a block diagram. The mobile phone is programmed to operate under the control of a central processing unit (CPU) **1**. An RF sub-system 3 and an analogue to digital (A/D) converter **4** are enabled by CPU **1** (via lines **12** and **13**) periodically in order to receive radio signals from a base station arriving at antenna **2** during an allocated timeslot. The radio signals arriving at antenna **2** are connected to RF sub-system **3** where the RF signal is down-converted to a baseband analogue signal. The digital signal is retrieved from the baseband analogue signal in A/D converter **4** and the in-phase (**I**) and quadrature (**Q**) samples from A/D converter **4** are stored in buffer **5.**

The training sequences included in the transmitted bursts are stored in the phone and correlation of the received signal with the stored training sequence in correlator **6** provides an estimate of the burst timing.
Correlator **6** and equaliser **7** are part of a digital signal processor (DSP) **8**. The estimate of burst timing provided by correlator **6** is used by the equaliser **7**. The burst timing estimate is fed to the CPU **1** via line **10** where it is used in a time tracking algorithm by means of which RF sub-system **3** and A/D converter **4** are enabled for reception in the next allocated transmission slot. Traffic and control information produced from channel decoding is fed to CPU **1** as indicated by broken line **11**.

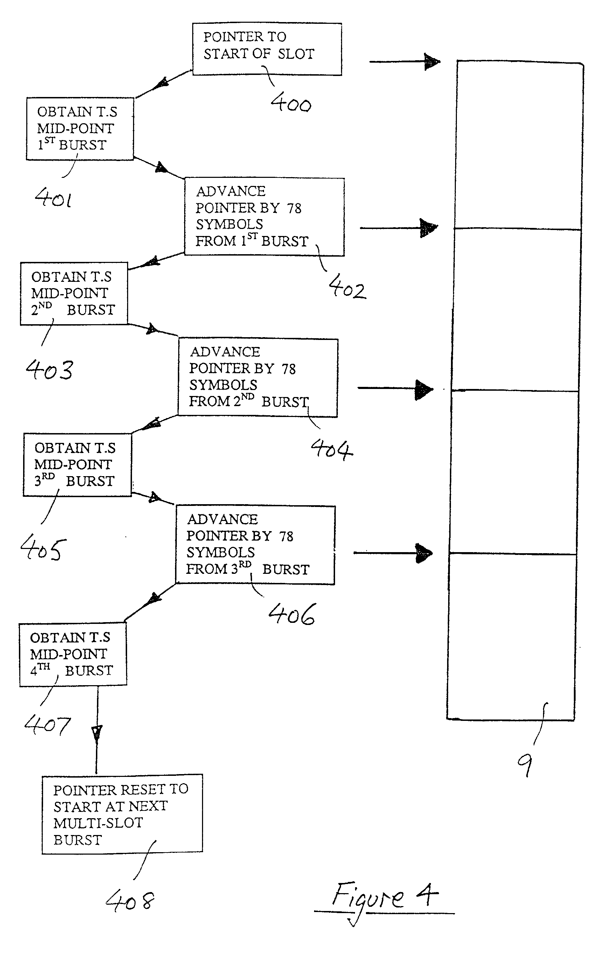

With reference to figure 4, a memory storage **9** containing data associated with a multi-slot sequence of bursts and the method according to the invention are illustrated. The 1^{st}, 2^{nd}, 3^{rd} and 4^{th} bursts have been transmitted consecutively by a base station and are to be received by the mobile terminal. The 1^{st} burst is within timeslot zero, the 2^{nd} burst is within timeslot one et seq. All of the data contained within the four bursts are streamed in memory in the sequence that they are received.

The estimated position of the 1^{st} burst within timeslot 0 is the estimate derived from the synchronisation burst referred to above. Correlating the first burst with the expected training sequence provides a fresh estimate of burst timing. The fresh estimate of burst timing derived from the first burst is used to update the timing of the second burst. Similarly following correlation of the second burst with the expected training sequence the timing of the third burst is corrected before equalisation of the third burst in accordance with the result of the updated timing estimate for the second burst. Subsequently the result of correlation of the third burst is used to correct the timing of the fourth burst. In this manner the timing error is likely to reduce for each burst and therefore timing errors will converge through the multiple burst.

Burst timing corrections may be achieved simply by the means illustrated in figure 4 which represents memory locations containing all of the data in the multi-slot. A pointer is directed to the position in memory of the start of the first slot (**400**). This first position in memory is selected in accordance with the timing estimate derived from the synchronisation burst.

Correlation of the first burst with the expected training sequence provides an estimate of the position of the symbol at the mid-point of the burst (**401**). The data presented to the equaliser in respect of the first burst comprises the first 156 symbols stored in the memory. Equalisation of the first burst then proceeds.

Concurrently with the equalisation of the first burst, the pointer is advanced through 78 symbols (156/2) from the mid-point position obtained from the correlation process for the first burst so as to represent the start of the second slot (**402**). As there are 156.25 symbols in each slot then 156/2 symbols from the mid-point of the first burst is nominally the start point for the next slot.

The 156 symbols from the new pointer position in memory corresponding with the start of the second slot are correlated with the expected training sequence and a mid-point position derived for the second burst (**403**). Equalisation of the second burst then proceeds and the pointer is advanced through 78 symbols mid-point position derived for the second burst to define the beginning of the third burst (**404**).

The 156 symbols from the new pointer position in memory corresponding with the start of the third burst are correlated with the expected training sequence and a mid-point position derived for the third burst (**405**). Equalisation of the third burst then proceeds and the pointer is advanced through 78 symbols from the mid-point position derived for the third burst to align with the beginning of the fourth burst (**406**).

The 156 symbols from the new pointer position in memory corresponding with the start of the fourth burst are correlated with the expected training sequence and a mid-point position derived for the fourth burst (**407**). Equalisation of the fourth burst then proceeds and the pointer remains at the start of the fourth burst until it is reset at initialisation before receipt of the next series of bursts (**408**).

A smaller error is likely in the burst timing estimate for the last burst than for the previous bursts and therefore the timing estimate for the last burst may be returned to the CPU for use in the burst timing algorithm. Alternatively an average timing estimate derived from all bursts in the series of bursts may be returned to the CPU.

Whilst the description above referred to a series of bursts occurring within successive timeslots, the invention may be applied more generally. The sequence of timeslots used for the transmissions are known at the receiver and the data streamed to memory storage and operated on accordingly.

Also, on receipt of a series of bursts it would normally be the case that the first burst of the series arriving at the receiver would be processed in advance of those bursts arriving subsequently. In some circumstances, however, there will be advantages attached to the processing of bursts arriving at the receiver later in the series in advance of bursts arriving earlier in the series. One such circumstance arises for example in GPRS when an uplink status flag (USF) is included in a burst then the information contained within that burst is required to be known quickly. A transmission due from the mobile terminal can be missed if the burst with USF is not processed quickly.

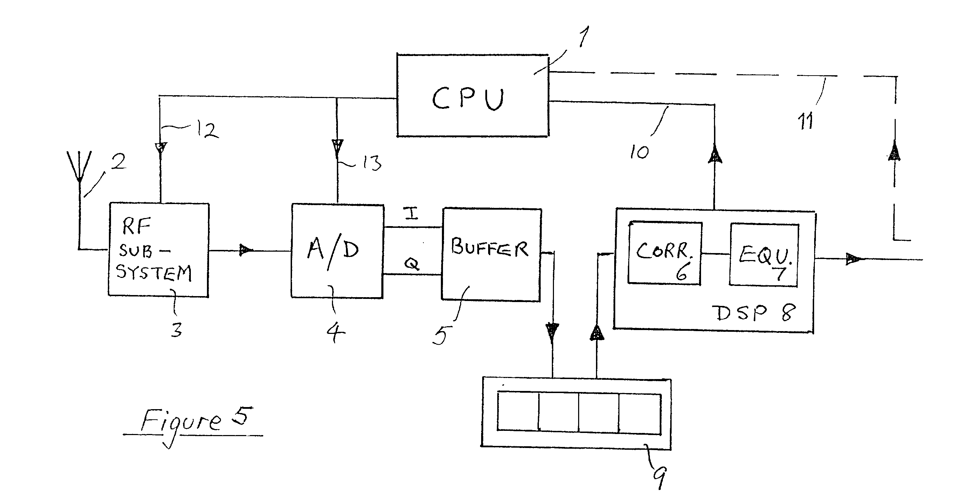

With reference to figure 5, part of a radio receiver modified to carry the invention into effect is shown as a block diagram. When operating to receive a multiple burst, CPU **1** enables RF sub-system **3** and A/D converter **4** to receive for the duration of the multiple slot. The whole of the data within the series of bursts comprising the multiple slot are streamed into memory storage **9**. The pointer in memory storage **9** is set to the start of the first burst in accordance with current burst timing estimate from the CPU **1**. The sequence of operations as described above with reference to figure 4 then proceeds. Memory storage **9** may be partly filled for single burst reception.

## Claims

1. A method of decoding digital data contained in a series of bursts comprising receiving and storing all of the data within a complete series of bursts, processing the stored data corresponding to a first burst in said series in accordance with current timing synchronisation to produce updated timing synchronisation and successively modifying the selection of the stored data corresponding to the other bursts in the series of bursts in accordance with updated timing synchronisation derived from a previously processed burst.

2. A method of decoding digital data as in claim 1 in which said updated timing synchronisation is derived from correlating a received burst including a training sequence with an expected training sequence.

3. A method of decoding digital data as in claims 1 and 2 in which said current timing synchronisation is derived from a synchronisation burst

4. A method of decoding digital data as in claims 1 to 3 in which said series of bursts is streamed into memory in a receiver.

5. A method of decoding digital data as in claim 4 in which all of the data within the series of bursts remain in memory storage contemporaneously.

6. A receiver for decoding digital data contained in a series of bursts **characterised by**:
memory storage into which all of the data within a complete series of bursts is streamed,
means for processing the stored data corresponding to a first burst in said series in accordance with current timing synchronisation to produce updated timing synchronisation,
and means for successively modifying the selection of the stored data corresponding to other bursts in the series of bursts in accordance with updated timing synchronisation derived from a previously processed burst.
